# EUROPÄISCHE PATENTANMELDUNG

(11) **EP 2 735 515 A1**
(43) Veröffentlichungstag der Anmeldung: **28.05.2014**
(21) Anmeldenummer: 13194530.5
(22) Anmeldetag: 26.11.2013
(51) Int. Cl.: B65B 43/18, B65B 43/28, B65B 7/20

(54) **Vorrichtung zum Aufrichten eines Faltschachtelzuschnittes**

(30) Priorität: 26.11.2012 DE 102012111449
(71) Anmelder: Pester Pac Automation GmbH, 87787 Wolfertschwenden (DE)
(72) Erfinder: Haug, Hans, D-87730 Bad Grönenbach (DE)
(74) Vertreter: Hutzelmann, Gerhard

(57) **Zusammenfassung**

Vorrichtung zum Aufrichten eines Faltschachtelzuschnittes (2) zu einer Faltschachtel (20), mit wenigstens einem Vorratsstapel (1) an flachliegenden Kartonzuschnitten (2), die eine Bodenfläche, zwei Seitenwände sowie mehrere Stirnwände aufweisen, mit zwei Aufrichtestationen (3,6) sowie einer Ablagestation (8) für die aufgerichteten Faltschachteln (20), wobei jeweils der oberste oder unterste Kartonzuschnitt (2) in einer ersten Aufrichtestation (3) zu einer offenen Hülse geformt wird, anschließend befüllt wird, während in einer zweiten, unmittelbar an die erste Aufrichtestation anschließenden Station (6) Stirnklappen an die Hülse angelegt werden und anschließend verschlossen werden.

## Beschreibung

Die Erfindung bezieht sich auf eine Vorrichtung zum Aufrichten eines Faltschachtelzuschnittes zu einer Faltschachtel, mit wenigstens einem Vorratsstapel an flachliegenden Kartonzuschnitten, die eine Bodenfläche, zwei Seitenwände sowie mehrere Stirnwände aufweisen, mit zwei Aufrichtestationen sowie einer Ablagestation für die aufgerichteten Faltschachteln.

Derartige Vorrichtungen sind in vielen Ausgestaltungen bekannt. Dabei sind jedoch meist längere Transportwege notwendig um den Kartonzuschnitt einerseits aufzurichten, zu befüllen, zu verschließen und auch noch für den Weitertransport zu stapeln.

Der Erfindung liegt die Aufgabe zugrunde eine Vorrichtung der genannten Art zu schaffen, mit der diese Vorgänge sicher aber auf engstem Raum auszuführen sind.

Diese Aufgabe wird erfindungsgemäß dadurch gelöst, dass jeweils der oberste oder unterste Kartonzuschnitt in einer ersten Aufrichtestation zu einer offenen Hülse geformt wird, anschließend befüllt wird, während in einer zweiten, unmittelbar an die erste Aufrichtestation anschließenden Station Stirnklappen an die Hülse angelegt werden und anschließend verschlossen werden.

Damit wird unmittelbar neben einander der Kartonzuschnitt zu einer Verpackung aufgerichtet, diese befüllt und verschlossen.

Gemäß einer vorteilhaften Ausgestaltung der Erfindung ist ein Saugheber vorgesehen, welcher einen Kartonzuschnitt anzuheben und/oder beim Aufrichten zu halten vermag.

Hierdurch wird eine sehr gute Möglichkeit zur Aufrichtung des Kartonzuschnitts geschaffen.

Ebenfalls sehr vorteilhaft ist es erfindungsgemäß, wenn eine Stützanordnung, die als Schienenanordnung ausgebildet sein kann, vorgesehen ist, die unter den angehobenen Kartonzuschnitt zu fahren vermag, um den Kartonzuschnitt beim ersten Umfalten der Seitenwände zu unterstützen.

Damit wird in einer einzigen Station der Kartonzuschnitt vereinzelt und zu einer offenen Hülse aufgerichtet.

Gemäß einer weiteren vorteilhaften Ausgestaltung der Erfindung ist der Saugheber mit einer oder mehreren Saugplatten ausgerüstet, die den Kartonzuschnitt im flach liegenden Zustand aufnehmen und beim Anheben den Kartonzuschnitt an vorgesehenen Faltlinien zu einer Hülse aufziehen bzw. aufdrücken.

Der Saugheber kann so an die aufzurichtenden Kartonzuschnitte auf einfache Weise angepasst werden.

Erfindungsgemäß ist die erste Station derart ausgebildet, dass in die teilweise aufgerichtete Hülse seitlich oder vertikal ein zu verpackendes Produkt eingeschoben werden kann.

In einer einzigen Station erfolgt dann neben dem Aufrichten auch noch das Befüllen durch seitliches oder vertikales Einschieben des Produktes in die noch offene Hülse.

Erfindungsgemäß ist weiter vorgesehen, dass in einer ersten und/oderzweiten Station die Stirnwände angefaltet und verschlossen werden.

Damit wird unmittelbar neben dem Vorratsstapel aus dem Kartonzuschnitt eine bereits fertig aufgerichtete und befüllte Verpackung hergestellt, die auch bereits verschlossen ist. Bei einer vertikalen Anordnung ist es vorteilhaft, wenn ein Ende der Hülse bereits vor dem Einschieben des Produktes verschlossen wird.

Eine weitere vorteilhafte Ausgestaltung der Erfindung ist dadurch gekennzeichnet, dass in der zweiten Station ein Klebeeinrichtung zum Verschließen der Verpackung vorgesehen ist.

Diese Klebeeinrichtung kann entsprechend den jeweiligen Anforderungen mit einem Klebemittelauftrag versehen sein oder mit Klebebändern bestückt sein.

Gemäß einer vorteilhaften Ausgestaltung der Erfindung ist vorgesehen, dass nach der zweiten Station eine Ablagestation vorgesehen ist, mit einem in mehreren Richtungen beweglichen Greifer, der die fertigen Verpackungen zu greifen vermag und ausgerichtet auf wenigstens einer, vorzugsweise wenigstens zwei parallel neben einander angeordneten Paletten oder dergleichen zu stapeln vermag.

Als sehr vorteilhaft hat es sich im Rahmen der Erfindung erwiesen, wenn wenigstens ein Transportband zwischen den Stationen vorgesehen ist.

Damit ist eine einfache Weitergabe der bereits vorgeformten Verpackung gewährleistet.

Als sehr vorteilhaft hat es sich auch ergeben, wenn gemäß einer weiteren Ausgestaltung der Erfindung die Greifer seitlich, oberhalb oder unterhalb der Stationen angeordnet sind.

Damit können die Greifer platzsparend angeordnet werden und können trotzdem den gesamten vorgesehenen Bereich abdecken.

Ebenfalls als sehr vorteilhaft hat es sich erwiesen, wenn erfindungsgemäß die Aufricht- und die Füllstation miteinander kombiniert sind.

Dadurch ist eine sehr kompakte Anordnung ermöglicht.

Als weitere vorteilhafte Ausgestaltung der Erfindung ist vorgesehen, dass die Klebestation mit der Verschlussstation kombiniert ist.

Damit wird erreicht, dass die Verklebung der Verpackung unmittelbar nach dem Verschließen erfolgt.

Eine weitere vorteilhafte Ausgestaltung der Erfindung ist dadurch gekennzeichnet, dass ein zweiter Vorratsstapel automatisch auf den ersten Vorratsstapel überführt werden kann und so ein automatischer Betrieb ermöglicht wird.

Dabei kann der erste und/oder zweite Vorratsstapel erfindungsgemäß sowohl innerhalb als auch außerhalb der Vorrichtung vorgesehen sein, wobei eine Austauschbarkeit der ersten und der zweiten Vorratsstapel vorgesehen sein kann.

Damit ist innerhalb geringer Abmessungen eine vollständigen Vorrichtung zum Herstellen einer Verpackung aus einem flach liegenden Kartonzuschnitt, deren Befüllung und Verschließung sowie der Stapelung zum Weitertransport geschaffen. Weiterhin hat es sich erfindungsgemäß als sehr vorteilhaft erwiesen, wenn eine Hub- und/oder Drehstation zur Ausrichtung, Drehung und Übergabe der fertigen Verpackungen vorgesehen ist, wobei diese Station durch einen Greifer bzw. Roboterarm realisiert sein kann.

Hierdurch kann auf kleinstem Raum die fertige Verpackung versandfertig konfektioniert werden und in Kartons oder auf Paletten gepackt werden.

Äußerst vorteilhaft ist es erfindungsgemäß auch, wenn eine Sicherheitseinrichtung vorgesehen ist, die ein versehentliches Hineingreifen oder Hineingehen in den Arbeitsbereich der Vorrichtung verhindert bzw. die den Arbeitsbereich beim Austausch von Vorratsstapeln und/oder Paletten oder dergleichen in der Ablagestation beschränkt.

Hierdurch wird eine sichere Bedienung der Vorrichtung ermöglicht.

In der Zeichnung ist die Erfindung anhand zweier Ausführungsbeispiels veranschaulicht. Dabei zeigen:

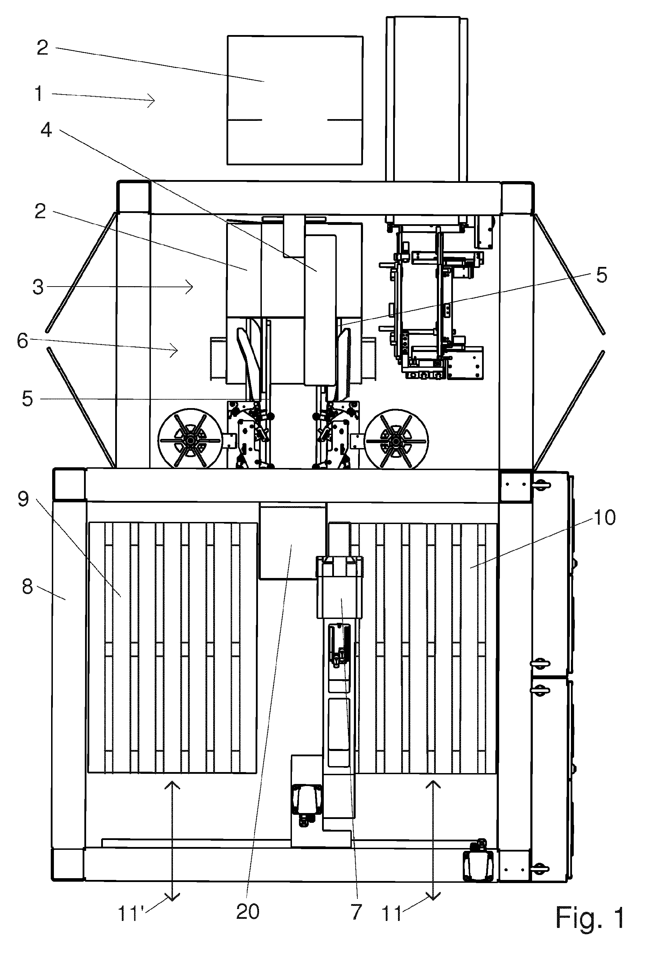

- Fig.1: eine Draufsicht der Vorrichtung mit einem oberhalb angeordneten Saugheber, einer Schienenanordnung sowie Verschließ- und Befülleinrichtung mit daneben angeordneter Stapelstation,

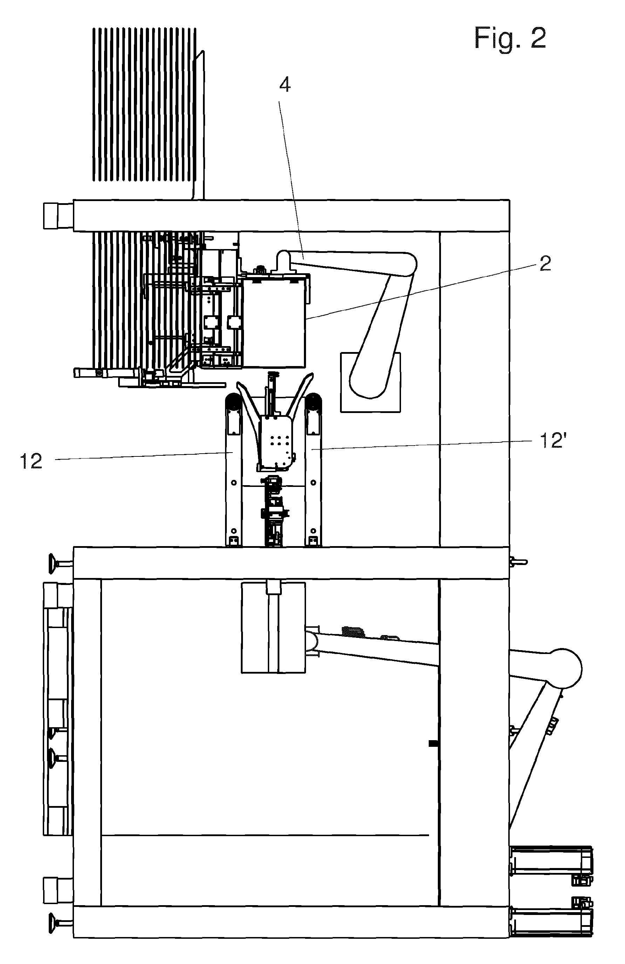

- Fig.2: eine Vorderansicht der selben Vorrichtung,

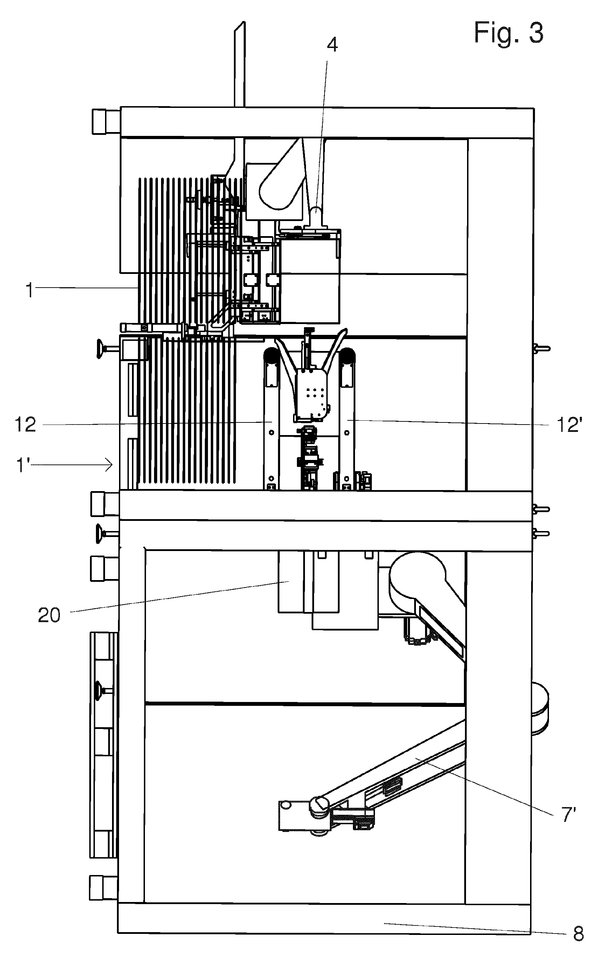

- Fig.3: eine Vorderansicht einer weiteren Vorrichtung mit einem Saugheber neben einer Kartontransportstrecke, einer Schienenanordnung sowie Verschließ- und Befülleinrichtung mit daneben angeordneter Stapelstation und

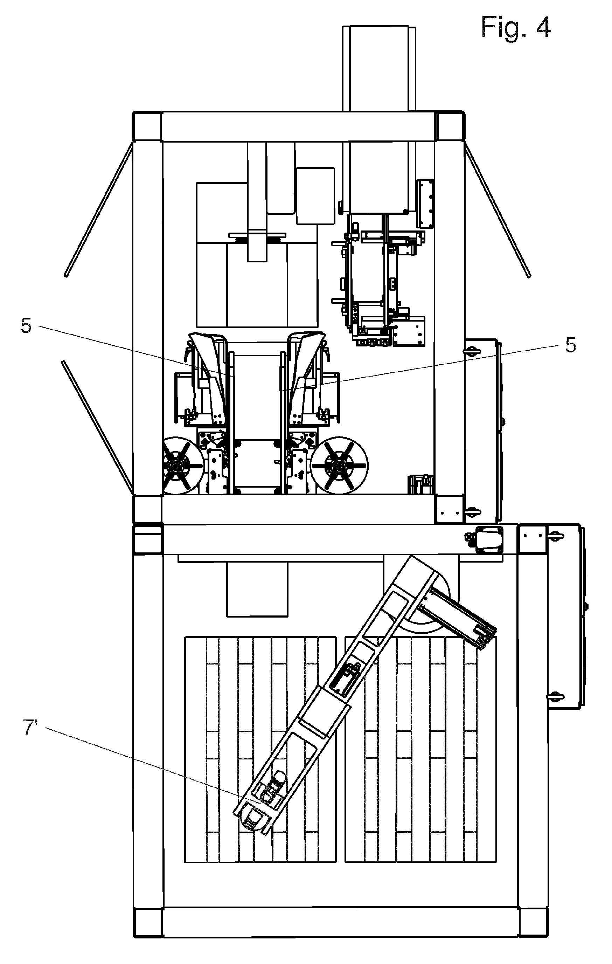

- Fig.4: eine Draufsicht derselben Vorrichtung

Mit 1 bzw. 1' ist in den Figuren ein Vorratsstapel von übereinander liegenden Kartonzuschnitten 2 bezeichnet. Der Vorratsstapel 1' ist unmittelbar neben einer ersten Aufrichtestation 3 platziert und wird automatisch in diese bewegt, sobald der dortige Vorratsstapel 1 mit Kartonzuschnitten 2 aufgebraucht ist. Es ist in diesem Zusammenhang auch denkbar, daß der Austausch der Vorratsstapel 1 und 1' manuell erfolgt, wobei auch dies im laufenden Betrieb erfolgen kann.

Der jeweils oberste Kartonzuschnitt 2 in dieser ersten Aufrichtestation 3 wird von einem darüber angeordneten Saugheber 4 erfasst und vom Vorratsstapel abgehoben. Darauf fährt eine seitlich angeordnete Schienenanordnung 5 unter diesen Kartonzuschnitt 2. Durch ein Zusammenwirken von Saugheber 4 und Schienenanordnung 5 wird der Kartonzuschnitt 2 zu einer offenen Hülse aufgerichtet und danach befüllt, wobei das zu verpackende Produkt seitlich in die offene Hülse eingeschoben wird.

Denkbar ist es aber auch, daß jeweils von einem Stapel der unterste Kartonzuschnitt 2 abgezogen und dieser dann aufgerichtet wird. Zudem ist es denkbar, daß anstatt der Schienenanordnung 5 eine beliebige andere Stützanordnung vorgesehen ist. Denkbar ist hier beispielsweise auch eine Transportbandanordnung. Bei entsprechender Ausgestaltung des Saughebers 4 kann auch völlig auf die Stützanordnung verzichtet werden. Zudem kann das zu verpackende Produkt auch vertikal in die offene Hülse eingeschoben werden. In diesem Zusammenhang ist es denkbar, daß die Hülse bereits vor dem Einschieben des zu verpackenden Produktes einseitig verschlossen wird.

Diese befüllte Hülse wird dann über ein Transportober- und unterband 12 bzw. 12' einer Verschlussstation 6 zugeführt, die unmittelbar neben der ersten Aufrichtestation angeordnet ist. Aufgrund des geringen Abstandes zwischen den beiden Stationen 3 und 6 ist es auch möglich, dass der Saugheber 4 den Weitertransport der Hülse übernimmt. In dieser zweiten Station 6 wird der Kartonzuschnitt 2 fertig aufgerichtet und anschließend verschlossen.

Das Verschließen kann durch einen Klebstoffauftrag oder durch Klebebänder, die vorzugsweise in Rollenform vorliegen, erfolgen.

Die aus dem Kartonzuschnitt 2 fertig aufgerichtete, befüllte und verschlossene Faltschachtel 20 wird dann aus der zweiten Station 6 ausgestoßen und kann von einem Greifer 7 bzw. 7' erfasst werden, der seitlich an einer Ablagestation 8 - in mehreren Richtungen beweglich - gelagert ist.

In dieser Ablagestation 8 sind im dargestellten Ausführungsbeispiel zwei Paletten 9 und 10 vorgesehen, auf welche der Greifer 7 bzw. 7' die Verpackungen 20 ausgerichtet ablegt und stapelt. Die fertigen Stapel können dann seitlich aus der Ablagestation 8 entnommen werden. Hierzu sind Palettenein- bzw. ausläufe 11, 11' vorgesehen.

Es ist aber auch denkbar, daß nur eine Palette vorgesehen ist, die mit einem Greifer 7 bedient wird. Dabei kann eine Dreh- und Hubeinrichtung für die Verpackungen vorgesehen sein, so daß die fertigen Verpackungen beliebig auf den Paletten ausgerichtet werden können. Durch die Hubeinrichtung kann eine mehr vertikale Bauweise vorgesehen werden, die nochmals Standfläche spart. Das gesamte Handling der Faltschachtel kann dann oberhalb der Palette(n) erfolgen.

Ebenso können auch der Saugheber 4 als auch die Verschlußstation mit Greifarmen ausgerüstet sein, so daß auf herkömmliche Transportbänder verzichtet werden kann. Die Faltschachteln lassen sich durch Greifarme, die in der Regel als Roboterarme ausgebildet sind, äußerst flexibel handhaben.

Für die gesamte Vorrichtung kann eine Sicherheitseinrichtung vorgesehen sein, die ein versehentliches Hineingreifen oder Hineingehen in den Arbeitsbereich der Vorrichtung verhindert bzw. die den Arbeitsbereich beim Austausch von Vorratsstapeln und/oder Paletten oder dergleichen in der Ablagestation beschränkt, wodurch die Verletzungsgefahr für den Bediener auch bei Unachtsamkeit oder gar Vorsatz reduziert bzw. ausgeschlossen wird.

## Patentansprüche

1. Vorrichtung zum Aufrichten eines Faltschachtelzuschnittes (2) zu einer Faltschachtel (20), mit wenigstens einem Vorratsstapel (1) an flachliegenden Kartonzuschnitten (2), die eine Bodenfläche, zwei Seitenwände sowie mehrere Stirnwände aufweisen, mit zwei Aufrichtestationen (3,6) sowie einer Ablagestation (8) für die aufgerichteten Faltschachteln (20), **dadurch gekennzeichnet, dass** jeweils der oberste oder unterste Kartonzuschnitt (2) in einer ersten Aufrichtestation (3) zu einer offenen Hülse geformt wird, anschließend befüllt wird, während in einer zweiten, unmittelbar an die erste Aufrichtestation anschließenden Station (6) Stirnklappen an die Hülse angelegt werden und anschließend verschlossen werden.

2. Vorrichtung nach Anspruch 1, **dadurch gekennzeichnet, dass** ein Saugheber (4) vorgesehen ist, welcher einen Kartonzuschnitt (2) anzuheben und/oder beim Aufrichten zu halten vermag.

3. Vorrichtung nach Anspruch 1 oder 2, **dadurch gekennzeichnet, daß** eine Stützanordnung, die als Schienenanordnung (5) ausgebildet sein kann, vorgesehen ist, die unter den angehobenen Kartonzuschnitt (2) zu fahren vermag, um den Kartonzuschnitt beim ersten Umfalten der Seitenwände zu unterstützen.

4. Vorrichtung nach Anspruch 1, 2 oder 3, **dadurch gekennzeichnet, dass** der Saugheber (4) mit einer oder mehreren Saugplatten ausgerüstet ist, die den Kartonzuschnitt (2) im flach liegenden Zustand aufnehmen und beim Anheben den Kartonzuschnitt an vorgesehenen Faltlinien zu einer Hülse (2') aufziehen bzw. aufdrücken.

5. Vorrichtung nach einem der vorhergehenden Ansprüche, **dadurch gekennzeichnet, dass** die erste Station (3) derart ausgebildet ist, dass in die teilweise aufgerichtete Hülse (2') seitlich oder vertikal ein zu verpackendes Produkt eingeschoben werden kann.

6. Vorrichtung nach einem der vorhergehenden Ansprüche, **dadurch gekennzeichnet, dass** in der ersten und/oder zweiten Station (6) die Stirnwände angefaltet und verschlossen werden.

7. Vorrichtung nach Anspruch 5, **dadurch gekennzeichnet, dass** in der zweiten Station (6) eine Klebeeinrichtung zum Verschließen der Verpackung (20) vorgesehen ist.

8. Vorrichtung nach einem der vorhergehenden Ansprüche, **dadurch gekennzeichnet, dass** nach der zweiten Station (6) eine Ablagestation (8) vorgesehen ist, mit einem in mehreren Richtungen beweglichen Greifer (7, 7'), der die fertigen Verpackungen (20) zu greifen vermag und ausgerichtet auf wenigstens eine, vorzugsweise wenigstens zwei parallel neben einander angeordneten Paletten (8, 10) oder dergleichen zu stapeln vermag.

9. Vorrichtung nach einem der vorhergehenden Ansprüche, **dadurch gekennzeichnet, dass** wenigstens ein Transportband zwischen den Stationen vorgesehen ist.

10. Vorrichtung nach einem der vorhergehenden Ansprüche, **dadurch gekennzeichnet, dass** die Greifer (4, 7) seitlich, oberhalb oder unterhalb der Stationen (3, 8) angeordnet sind.

11. Vorrichtung nach einem der vorhergehenden Ansprüche, **dadurch gekennzeichnet, dass** die Aufricht- und die Füllstation miteinander kombiniert sind.

12. Vorrichtung nach einem der vorhergehenden Ansprüche, **dadurch gekennzeichnet, dass** die Klebestation mit der Verschlussstation (6) kombiniert ist.

13. Vorrichtung nach einem der vorhergehenden Ansprüche, **gekennzeichnet durch eine derartige Ausgestaltung,** dass ein zweiter Vorratsstapel (1') automatisch auf den ersten Vorratsstapel (1) überführt werden kann und so ein automatischer Betrieb ermöglicht wird.

14. Vorrichtung nach einem der vorhergehenden Ansprüche, **dadurch gekennzeichnet, dass** der erste und/oder der zweite Vorratsstapel (1') sowohl innerhalb als auch außerhalb der Vorrichtung vorgesehen sein kann, wobei eine Austauschbarkeit des ersten und der zweiten Vorratsstapel vorgesehen sein kann.

15. Vorrichtung nach einem der vorhergehenden Ansprüche, **dadurch gekennzeichnet, daß** eine Hub- und/oder Drehstation zur Ausrichtung, Drehung und Übergabe der fertigen Verpackungen vorgesehen ist, wobei diese Station durch einen Greifer bzw. Roboterarm realisiert sein kann.

16. Vorrichtung nach einem der vorhergehenden Ansprüche, **dadurch gekennzeichnet, daß** eine Sicherheitseinrichtung vorgesehen ist, die ein versehentliches Hineingreifen oder Hineingehen in den Arbeitsbereich der Vorrichtung verhindert bzw. die den Arbeitsbereich beim Austausch von Vorratsstapeln und/oder Paletten oder dergleichen in der Ablagestation beschränkt.
